(19) Europäisches Patentamt
European Patent Office
Office européen des brevets

(11) Veröffentlichungsnummer: **0 069 703**
**B1**

(12) # EUROPÄISCHE PATENTSCHRIFT

(45) Veröffentlichungstag der Patentschrift: **23.04.86**

(51) Int. Cl.[4]: **C 09 B 62/20,** D 06 P 3/66, D 06 P 3/10

(21) Anmeldenummer: **82810281.4**

(22) Anmeldetag: **01.07.82**

(54) **Reaktivfarbstoffe, deren Herstellung und Verwendung.**

(30) Priorität: **07.07.81 CH 4461/81**

(43) Veröffentlichungstag der Anmeldung: **12.01.83 Patentblatt 83/2**

(45) Bekanntmachung des Hinweises auf die Patenterteilung: **23.04.86 Patentblatt 86/17**

(84) Benannte Vertragsstaaten: **CH DE FR GB IT LI**

(56) Entgegenhaltungen:
**FR - A - 1 563 661**
**FR - A - 2 390 478**
**LU - A - 59 203**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Seitz, Karl, Dr., Schützenweg 9, CH-4104 Oberwil (CH)**
Erfinder: **Hoegerle, Karl, Dr., Reinacherstrasse 68, CH-4053 Basel (CH)**

**EP 0 069 703 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Reaktivfarbstoffe werden in grossem Umfange für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in bezug auf Eignung für bestimmte Färbeverfahren und Echtheitsniveau der Färbungen, vielfach nicht voll befriedigen.

Diese Feststellung trifft auch zu für eine koloristisch wichtige Klasse von Reaktivfarbstoffen, die «Hochreaktiven». So ergeben Reaktivfarbstoffe mit hoher Reaktivität im allgemeinen Färbungen mit ungenügender Stabilität der Faser-Farbstoff-Bindung. Andererseits sind Reaktivfarbstoffe mit hoher Reaktivität von grossem praktischem Interesse, da bei ihrer Anwendung verfahrenstechnische Vereinfachungen und Einsparungen erzielt werden. Die Bereitstellung von verbesserten Farbstoffen der oben genannten Klasse ist somit dringend erwünscht. Der vorliegenden Erfindung lag daher die Aufgabe zugrunde, neue Reaktivfarbstoffe zu finden, die eine hohe Reaktivität besitzen, die aber den oben genannten Mangel nicht aufweisen, und die zudem besonders für das Ausziehfärbeverfahren geeignet sind. Es hat sich gezeigt, dass die weiter unten definierten neuen Reaktivfarbstoffe die gestellte Aufgabe weitgehend erfüllen.

Die FR-A 2 390 478 bezieht sich auf solche Reaktivfarbstoffe, die die Methylsulfonylgruppe in der 5-Stellung des Pyrimidinringes tragen. Es wurde nun gefunden, dass Reaktivfarbstoffe, worin der Methylsulfonylrest in der 4-Stellung des Pyrimidinringes geknüpft ist, überraschende Eigenschaften aufweisen.

Gegenstand der Erfindung sind Reaktivfarbstoffe der Formel

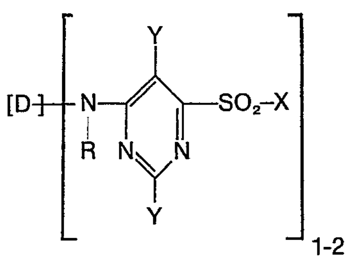

(1),

worin D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder gegebenenfalls substituiertes $C_{1-4}$-Alkyl, X $C_{1-4}$-Alkyl und Y Fluor, Chlor oder Brom ist, und die beiden Y gleich oder verschieden sind.

Wichtige Untergruppen der Reaktivfarbstoffe der Formel (1) sind.

a) Reaktivfarbstoffe der Formel (1), worin D, R und X die unter Formel (1) angegebenen Bedeutungen haben und Y Chlor ist.

b) Reaktivfarbstoffe der Formel (1), worin D, R und Y die unter Formel (1) angegebenen Bedeutungen haben und X Methyl ist.

c) Reaktivfarbstoffe der Formel (1), worin D und R die unter Formel (1) angegebenen Bedeutungen haben, X Methyl und Y Chlor ist.

d) Reaktivfarbstoffe der Formel (1), worin D der Rest eines Mono- oder Disazofarbstoffes ist.

e) Reaktivfarbstoffe der Formel (1), worin D der Rest eines Metallkomplexazo- oder Formazanfarbstoffes ist.

f) Reaktivfarbstoffe der Formel (1), worin D der Rest eines Metallkomplexazofarbstoffes der Benzol- oder Naphthalinreihe ist.

g) Reaktivfarbstoffe der Formel (1), worin D der Rest eines 1 : 1-Kupferkomplexazofarbstoffes der Benzol- oder Naphthalinreihe ist, und das Kupferatom an jeweils eine metallisierbare Gruppe in ortho-Position zur Azobrücke gebunden ist.

h) Reaktivfarbstoffe der Formel

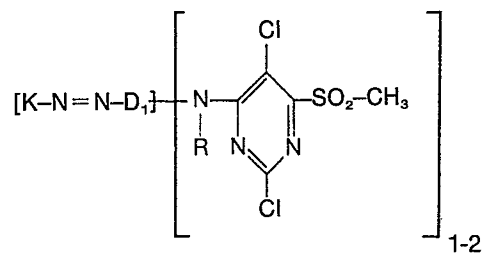

(2),

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist, oder je ein Reaktivrest sowohl an die Diazokomponente als auch an die Kupplungskomponente gebunden ist.

i) Reaktivfarbstoffe der Formel (2), worin R Wasserstoff oder Methyl ist.

j) 1 : 1-Kupferkomplexe von Reaktivfarbstoffen der Formel (2).

Ein besonders wertvoller Farbstoff ist der Reaktivfarbstoff der Formel

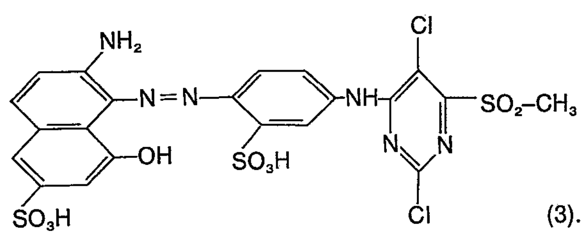

(3).

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Äthyl, Propyl, Isopropyl und Butyl, Alkoxygruppen mit 1 bis 4 Kohlenstoffatomen, wie Methoxy, Äthoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Diejenigen Reaktivfarbstoffe, worin D der Rest eines Azofarbstoffes ist, enthalten als Substituenten insbesondere Methyl, Äthyl, Methoxy, Benzoylamino, Amino, Ureido, Sulfomethyl, Hydroxy und Sulfo.

Als Alkylrest kommt für R in Formel (1) ein geradkettiger oder verzweigter Alkylrest in Betracht, der auch substituiert sein kann, z.B. durch Halogen, Hydroxy, Cyan oder Sulfo. Als Beispiele für R seien genannt: Methyl, Äthyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl und Sulfomethyl.

Der Rest X ist Methyl, Äthyl, Propyl, Isopropyl, Butyl, Isobutyl, sek.-Butyl und tert.-Butyl. Vor allem ist X die Methylgruppe.

Die Farbstoffe der Formel (1) sind faserreaktiv, da sie in dem Pyrimidinrest mindestens eine Abgangsgruppe enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, dass man organische Farbstoffe der Formel

$$D-\underset{\displaystyle R}{\underset{|}{N}}H \qquad (4)$$

oder Farbstoffvorprodukte mit mindestens einem Äquivalent einer Verbindung der Formel

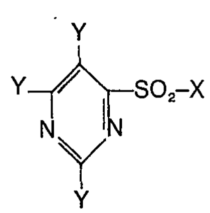

(5),

wobei D, R, X und Y in den Formeln (4) und (5) die unter Formel (1) angegebenen Bedeutungen haben, zu einem Reaktivfarbstoff der Formel (1) kondensiert, und dass man im Falle der Verwendung von Farbstoffvorprodukten diese in die gewünschten Endprodukte umwandelt.

Falls man von Farbstoffvorprodukten ausgeht, gelangt man zu den Reaktivfarbstoffen der Formel (1), indem man eine Komponente des Farbstoffes der Formel (4), die eine

$$-\underset{\displaystyle R}{\underset{|}{N}}H\text{–Gruppe}$$

enthält, und eine Verbindung der Formel (5) kondensiert, und in einer beliebigen Stufe des Verfahrens mit der anderen Komponente des Farbstoffes der Formel (4) umsetzt.

Vorzugsweise verwendet man als Ausgangsstoffe Verbindungen der Formel (5), worin alle drei Y Chloratome sind.

Die bevorzugten Reaktivfarbstoffe der Formel (1) werden hergestellt, indem man organische Farbstoffe der Formel (4) mit mindestens einem Äquivalent einer Verbindung der Formel

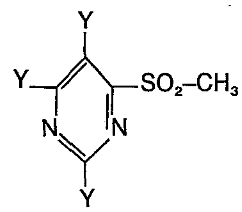

(6),

worin Y die unter Formel (1) angegebenen Bedeutungen hat, kondensiert.

Vorzugsweise kondensiert man mit einer Verbindung der Formel

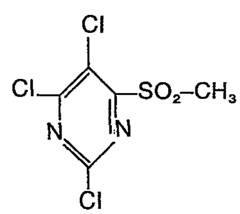

(7).

Vorzugsweise verwendet man ferner Verbindungen der Formel (4), worin D der Rest eines Mono- oder Disazofarbstoffes ist.

Nach der oben beschriebenen Verfahrensvariante, bei welcher man von Farbstoffvorprodukten ausgeht, können die Farbstoffe der Formel (1), worin D der Rest eines aus zwei oder mehr als zwei Komponenten zusammengesetzten organischen Farbstoffes ist, in der Weise hergestellt werden, dass man eine Komponente des Farbstoffes der Formel (4), die eine

$$-\underset{\displaystyle R}{\underset{|}{N}}H\text{–Gruppe}$$

enthält, und eine Verbindung der Formel (5) kondensiert, und in einer beliebigen Stufe des Verfahrens mit der anderen (bzw. den übrigen) Komponente(n) des Farbstoffes der Formel (4) zu einem Reaktivfarbstoff der Formel (1) umsetzt.

Beispiele für derartige, aus zwei oder mehr als zwei Komponenten zusammengesetzte organische Farbstoffe sind: Monoazo-, Disazo-, Trisazo-, Tetrazo-, Metallkomplex-, Formazan- und Azomethinfarbstoffe.

Die oben beschriebene Verfahrensvariante ist vor allem wichtig für die Herstellung von Reaktivfarbstoffen der Formel (1), worin D der Rest eines sulfogruppenhaltigen Azofarbstoffes ist. In diesen kann derjenige Teil des Azofarbstoffrestes, an den der Reaktivrest unmittelbar gebunden ist, entweder der Rest der Diazokomponente oder der Rest der Kupplungskomponente sein. Dadurch ergeben sich zwei Varianten der oben beschriebenen Verfahrensabänderung.

Die eine der beiden Varianten ist dadurch gekennzeichnet, dass man eine Diazokomponente des Farbstoffes, die eine

$-\underset{\substack{|\\R}}{N}H-$Gruppe

enthält, mit einer Verbindung der Formel (5) kondensiert, das erhaltene Kondensationsprodukt diazotiert und auf eine Kupplungskomponente kuppelt.

Die zweite Variante ist dadurch gekennzeichnet, dass man eine Kupplungskomponente des Farbstoffes, die eine

$-\underset{\substack{|\\R}}{N}H-$Gruppe

enthält, mit einer Verbindung der Formel (5) kondensiert, und auf das so erhaltene Kondensationsprodukt eine diazotierte Diazokomponente kuppelt.

Nach dieser Herstellungsvariante können Reaktivfarbstoffe der Formel (1), die zwei Reaktivreste enthalten, hergestellt werden, indem man eine Diazokomponente, die eine

$-\underset{\substack{|\\R}}{N}H-$Gruppe

enthält, mit einer Verbindung der Formel (5) kondensiert, dass man ferner eine Kupplungskomponente, die eine

$-\underset{\substack{|\\R}}{N}H-$Gruppe

enthält, mit einer Verbindung der Formel (5) kondensiert, und dass man das Kondensationsprodukt der Diazokomponente diazotiert und auf das Kondensationsprodukt der Kupplungskomponente kuppelt, wobei R und Y im Kondensationsprodukt der Diazokomponente unabhängig ist von R und Y im Kondensationsprodukt der Kupplungskomponente.

Farbstoffe, die zwei oder mehr als zwei Reaktivreste enthalten, sind auch in der Weise herstellbar, dass man Farbstoffe der Formel (4), die in D weitere

$-\underset{\substack{|\\R}}{N}H-$Gruppen

enthalten, mit einer entsprechenden Menge des Acylierungsmittels der Formel (5) kondensiert, so dass zwei oder mehr als zwei entsprechende Reste in das Farbstoffmolekül eingeführt werden.

Eine bevorzugte Ausführungsform ist dadurch gekennzeichnet, dass man organische Farbstoffe der Formel

$$\left[K{-}N{=}N{-}D_1\right]\!-\!\left[NH_2\right]_{1-2} \quad (8),$$

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, mit einer Verbindung der Formel (7) kondensiert, wobei die Kondensation an der $NH_2$-Gruppe der Diazokomponente oder an der $NH_2$-Gruppe der Kupplungskomponente erfolgt, oder mit zwei Mol der Verbindung der Formel (7) kondensiert, wobei die Kondensation an der $NH_2$-Gruppe der Diazokomponente und an der $NH_2$-Gruppe der Kupplungskomponente erfolgt.

Nach einer weiteren bevorzugten Herstellungsweise verwendet man Verbindungen der Formel (4), worin D der Rest eines Metallkomplexazo- oder Formazanfarbstoffes ist.

Ein Verfahren zur Herstellung von Reaktiv-Metallkomplexazofarbstoffen ist dadurch gekennzeichnet, dass man Verbindungen der Formel (4), worin D der Rest eines Azofarbstoffes der Benzol- oder Naphthalinreihe ist, der metallisierbare Gruppen in ortho-Position zur Azobrücke enthält, mit einer Verbindung der Formel (6) und mit schwermetallabgebenden Mitteln in beliebiger Reihenfolge umsetzt.

Bevorzugt ist ein Verfahren, nach dem man einen Monoazofarbstoff der Benzol- oder Naphthalinreihe, der in ortho-Position zur Azobrücke metallisierbare Gruppen enthält, mit einer Verbindung der Formel (7) und mit kupferabgebenden Mitteln in beliebiger Reihenfolge zu einem 1 : 1-Kupferkomplexazofarbstoff umsetzt.

Die als Ausgangsstoffe verwendeten Farbstoffe der Formel (4) können im Rest D wie weiter vorn beschrieben substituiert sein. Vorzugsweise geht man von organischen Farbstoffen der Formel (4) aus, worin D der Rest eines Azofarbstoffes ist, der als Substituenten Methyl, Äthyl, Methoxy, Benzoylamino, Amino, Ureido, Sulfomethyl, Hydroxy und Sulfo enthalten kann.

Der wertvolle Reaktivfarbstoff der Formel (3) wird in der Weise hergestellt, dass man den durch Kupplung von diazotierter 1-Amino-4-acetylaminobenzol-6-sulfonsäure auf 2-Amino-8-hydroxynaphthalin-6-sulfonsäure und anschliessende Verseifung der Acetylaminogruppe erhaltenen Azofarbstoff mit 2,4,5-Trichlor-6-methylsulfonylpyrimidin kondensiert.

Bei dem im vorangehenden beschriebenen Verfahren können die einzelnen Verfahrensschritte in

unterschiedlicher Reihenfolge, gegebenenfalls teilweise auch gleichzeitig ausgeführt werden. Dabei sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten frei gewählt werden kann.

Geht man, wie weiter vorn beschrieben, nicht von einem organischen Farbstoff der Formel (4) sondern von dessen Komponenten, z.B. von der Diazo- und Kupplungskomponente aus, so wird die Zahl der möglichen Ausführungsvarianten (Reaktionsfolgen) noch grösser. Diese lassen sich aber aufgrund der gegebenen Beschreibung ohne weiteres angeben.

Die Kondensationen der Verbindungen der Formel (5) mit den organischen Farbstoffen der Formel (4) bzw. den eine

$-\underset{R}{\underset{|}{N}}H-$Gruppe

enthaltenden diazotierbaren und/oder kupplungsfähigen Komponenten erfolgen vorzugsweise in wässriger Lösung oder Suspension, bei niedriger Temperatur und bei schwach saurem, neutralem bis schwach alkalischem pH-Wert, und so, dass im fertigen Farbstoff der Formel (1) noch mindestens ein Y als abspaltbarer Rest übrigbleibt. Vorteilhaft wird der bei der Kondensation freiwerdende Fluor-, Chlor- oder Bromwasserstoff laufend durch Zugabe wässriger Alkalihydroxyde, -carbonate oder -bicarbonate neutralisiert.

Als Ausgangsstoffe zur Herstellung der Reaktivfarbstoffe der Formel (1) seien genannt:

Verbindungen der Formel (5)
2,4,5-Trichlor-6-methylsulfonylpyrimidin,
2,4,5-Trifluor-6-methylsulfonylpyrimidin,
2,4,5-Tribrom-6-methylsulfonylpyrimidin,
2,4-Difluor-5-chlor-6-methylsulfonylpyrimidin,
2,4-Dichlor-5-fluor-6-methylsulfonylpyrimidin.

Als Farbstoffe der Formel (4) kommen besonders Farbstoffe der folgenden Strukturtypen in Betracht:

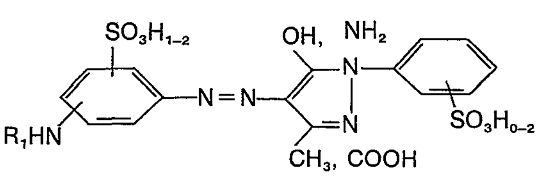

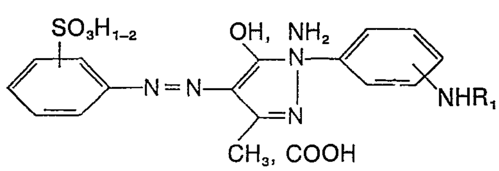

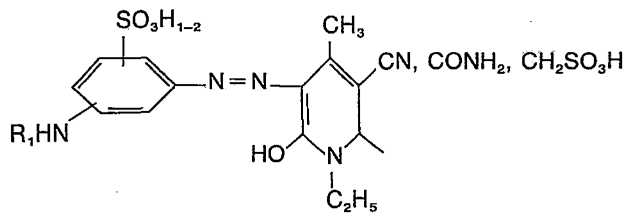

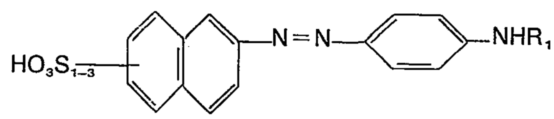

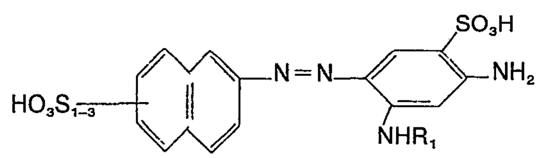

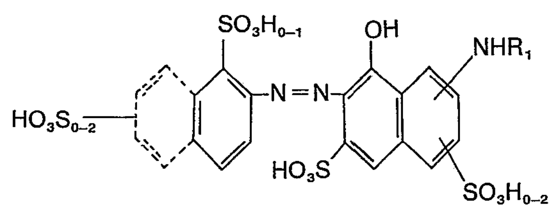

Metallkomplexe von Farbstoffen der Formeln

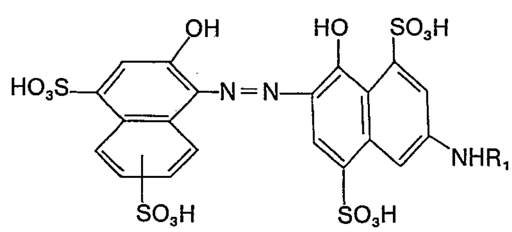

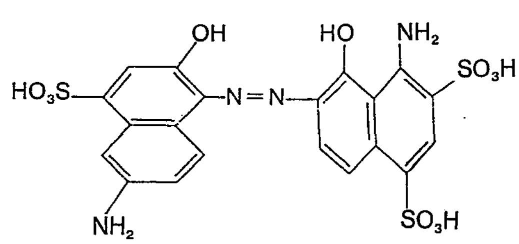

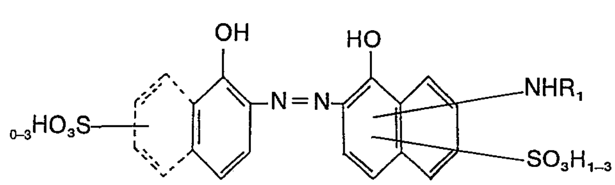

Als Metallatome sind Cu (1 : 1-Komplex) oder Cr und Co (1 : 2-Komplexe) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

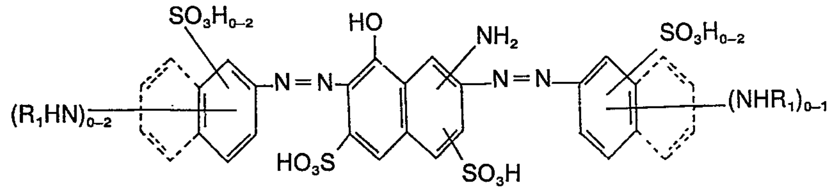

Die durch Strichelungen angedeuteten kondensierten Ringe stehen für alternativ mögliche Naphthalinsysteme.

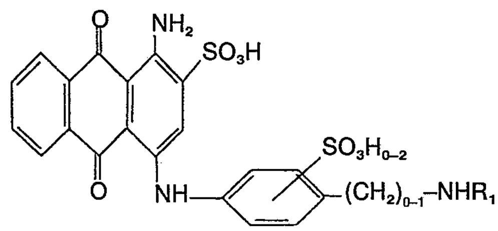

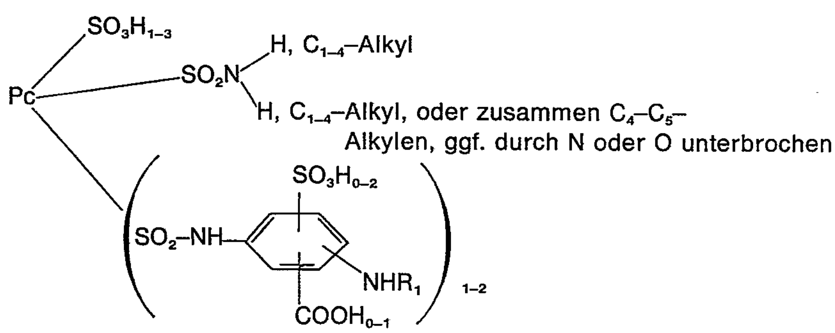

In dieser Formel steht Pc für den Cu- oder Ni-Phthalocyaninrest. Die Gesamtzahl der Substituenten am Pc-Gerüst ist dabei 4.

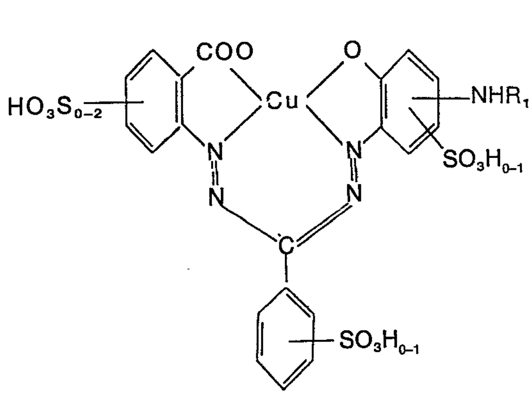

Die Farbstoffe der oben angegebenen Formeln können in den Alkyl- oder Arylresten weitersubstituiert sein, insbesondere durch die bei der Erläuterung von D in Formel (1) bzw. (2) genannten Substituenten.

Besonders wichtige Azofarbstoffe der Formel (8) sind die folgenden:

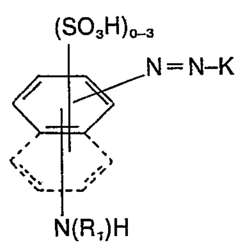

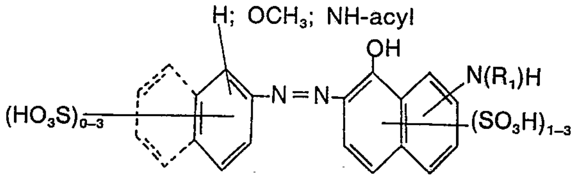

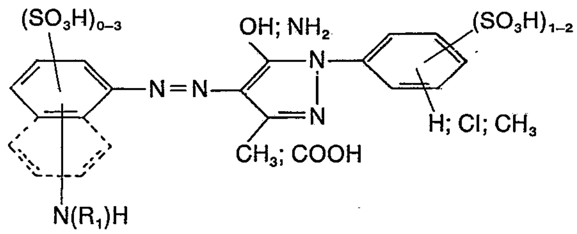

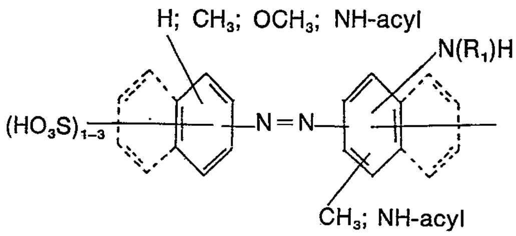

und

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und $R_1$ die bei der Erläuterung der Formel (1) angegebene Bedeutung hat, sowie die Metallkomplex-Azofarbstoffe der Formeln

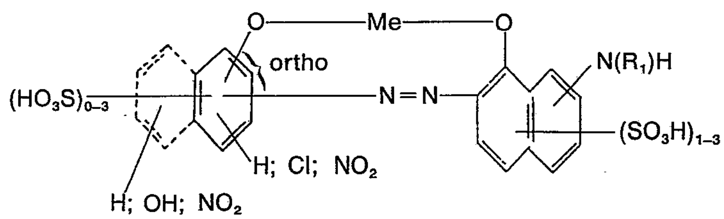

und

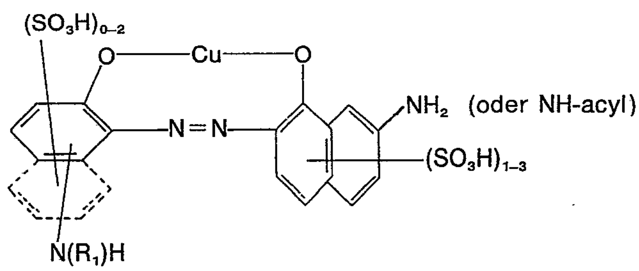

worin $R_1$ und acyl die oben angegebenen Bedeutungen haben und Me für Cu, Cr oder Co steht.

Bei der Herstellung der bevorzugten Reaktivfarbstoffe der Formel (1), worin D der Rest eines Azofarbstoffes, insbesondere eines Mono- oder Disazofarbstoffes ist, erfolgt die Diazotierung der eine diazotierbare Aminogruppe enthaltenden Zwischenprodukte in der Regel durch Einwirkung salpetriger Säure in wässrig-mineralsaurer Lösung bei tiefer Temperatur, die Kupplung bei schwach sauren, neutralen bis schwach alkalischen pH-Werten.

Die als faserreaktive Acylierungsmittel verwendeten Verbindungen der Formel (5) sind erhältlich durch Oxydation der entsprechenden Thioäther, z.B. mit elementarem Chlor in wässrig-alkoholischer Lösung. So erhält man das

2,4,5-Trichlor-6-methylsulfonylpyrimidin

der Formel (7) durch Umsetzung von 2,4,5,6-Tetrachlorpyrimidin mit Methylmercaptan bzw. einem Alkalimethylmercaptid in Methanol bei niedriger Temperatur, z.B. bei 0 bis 5 °C, und Oxydation des Umsetzungsproduktes mit Chlorgas in Methanol/Wasser ebenfalls bei niedriger Temperatur.

Die entsprechenden Brom- und Fluorverbindungen,

2,4,5-Tribrom-6-methylsulfonylpyrimidin und

2,4,5-Trifluor-6-methylsulfonylpyrimidin

können in analoger Weise hergestellt werden; und durch Verwendung anderer Alkylmercaptane sind die entsprechenden

2,4,5-Trihalogen-6-äthyl (propyl, isopropyl, butyl etc.) sulfonylpyrimidine zugänglich. Die 2,4-Difluor-5-chlor- oder -brom-6-alkylsulfonylpyrimidine können auch durch Umsetzung der entsprechenden Trichlor- oder Tribromverbindungen mit Fluorwasserstoff, Silberfluorid, Kaliumfluorid oder Schwefeltetrafluorid oder einem ähnlichen Fluorierungsmittel in einem organischen Lösungsmittel, wie z. B. Sulfolan, hergestellt werden.

Die Verbindungen der Formel (5) sowie deren Herstellungsverfahren bilden einen weiteren Gegenstand der vorliegenden Anmeldung.

Die Reaktivfarbstoffe der Formel (1) eignen sich zum Färben und Bedrucken der verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Padsteam-Verfahren nur kurze Dämpfzeiten. Sie ergeben Färbungen mit guten Nass- und Lichtechtheiten und hoher Farbstärke und bemerkenswert hoher Faser-Farbstoff-Bindungsstabilität, sowohl in saurem als auch in alkalischem Bereich.

Die Reaktivfarbstoffe der Formel (1) eignen sich auch zum Druck, insbesondere auf Baumwolle, ebenso aber auch zum Bedrucken von stickstoffhaltigen Fasern, z. B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Die Herstellung der Monoazo- oder Disazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

Beispiel 1

Herstellung von 2,4,5-Trichlor-6-methylsulfonyl-pyrimidin

In eine Lösung von 17,8 g 30,4%igem Natriummethylat in Methanol, verdünnt mit zusätzlichen 50 ml Methanol werden 4,9 g Methylmerkaptan eingeleitet. Diese Natriummethylmerkaptid-Lösung wird bei einer Temperatur von 0 bis 5° zu einer Lösung von 21,8 g 2,4,5,6-Tetrachlorpyrimidin in 200 ml Methanol getropft. Die entstandene farblose Suspension wird 4 Stunden bei 0 bis 5°, dann über Nacht bei Raumtemperatur ausgerührt und anschliessend mit 200 ml Wasser verdünnt. Die Suspension wird bei 0 bis 5° mit Chlorgas gesättigt und eine Stunde bei 0 bis 5° nachgerührt, filtriert und das Nutschengut mit Eiswasser gewaschen und im Vakuum bei 40° getrocknet. Das farblose Pulver wird mit 50 ml Tetrachlorkohlenstoff zum Sieden erhitzt, klärfiltriert und auf 10 bis 15° gekühlt. Aus der Lösung kristallisieren 15,3 g Produkt vom Smp. 128–129°. Aus der Mutterlauge können durch Einengen weitere 1,2 g vom Smp. 127–128° erhalten werden.

Beispiel 2

8,76 Teile des Farbstoffes der Formel

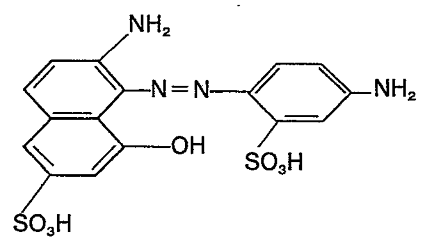

werden in 500 Teilen Wasser neutral gelöst. Zur erhaltenen Lösung tropft man bei Zimmertemperatur innert ca. 30 Minuten eine Lösung von 5,75 Teilen 2,4,5-Trichlor-6-methylsulfonyl-pyrimidin in 50 Teilen Aceton und hält das pH des Reaktionsgemisches durch Zutropfen einer Natriumhydroxydlösung zwischen 6 und 7, wozu ca. 20 Teile 1-n Natriumhydroxydlösung benötigt werden. Nach vollständiger Acylierung wird die Form des ausgefallenen Farbstoffes durch Zugabe von 50 Teilen Sole verbessert. Der schön kristallisierte Farbstoff wird abfiltriert, mit einer gesättigten Lösung von Dinatriumhydrogenphosphat gepuffert und im Vakuum bei ca. 50 °C getrocknet.

Der so erhaltene Farbstoff färbt Baumwolle sowohl nach dem Ausziehverfahren als auch nach dem Pad-Steam-Verfahren in blaustichig roten Tönen.

In der folgenden Tabelle sind weitere aminogruppenhaltige Chromophore aufgeführt, die mit 2,4,5-Trichlor-6-methylsulfonyl-pyrimidin zu Reaktivfarbstoffen umgesetzt werden können, die Baumwolle in den angegebenen Nuancen färben.

Tabelle I

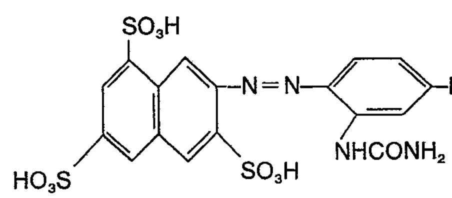 goldgelb

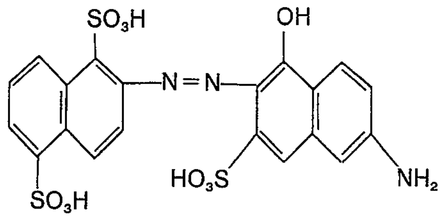

orange

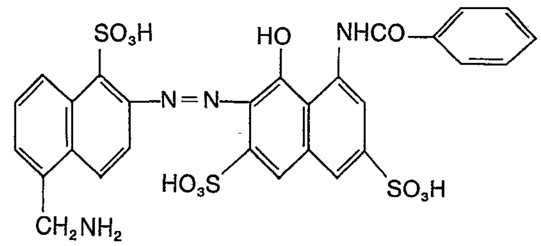

rot

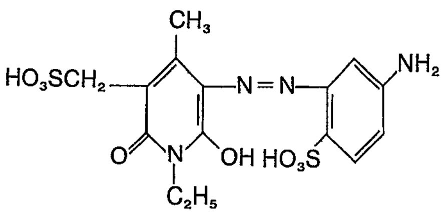

grünstichig gelb

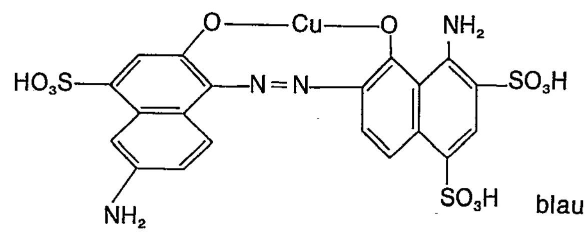

blau

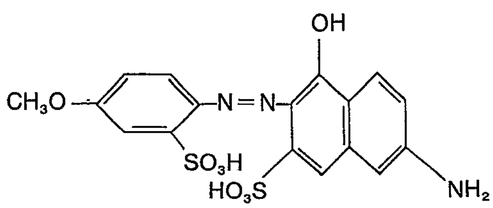

scharlach

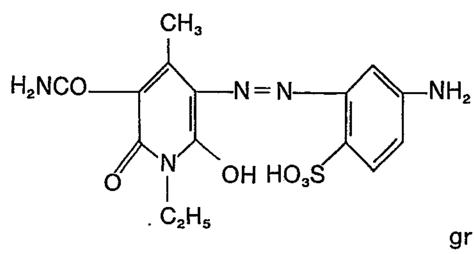

grünstichig gelb

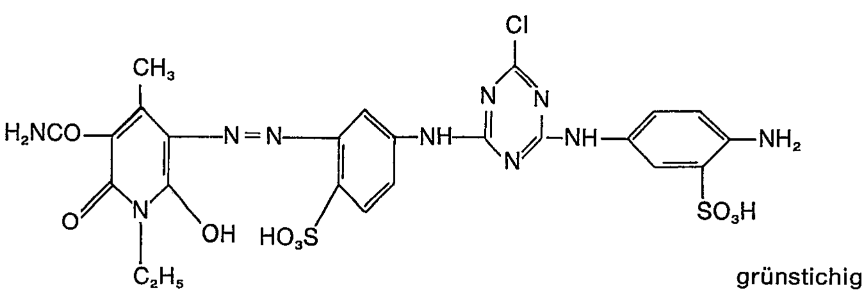

grünstichig gelb

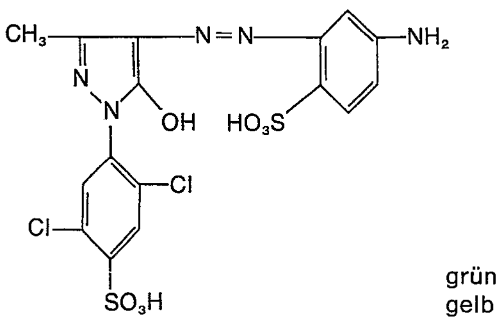

grünstichig gelb

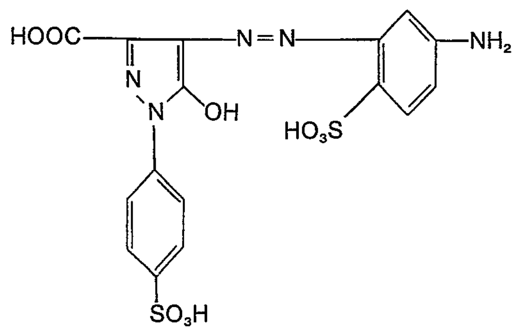

gelb

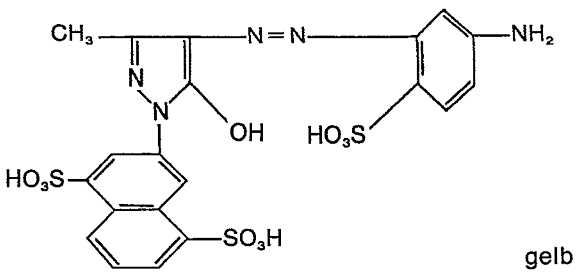

gelb

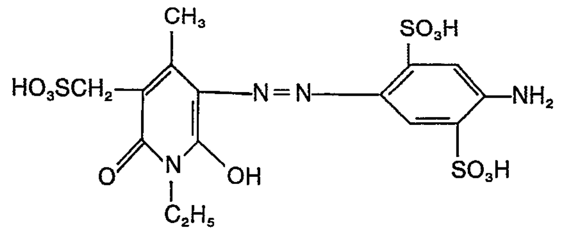

gelb

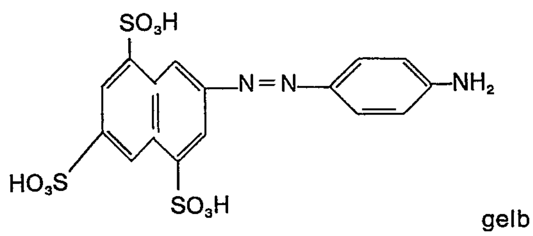

gelb

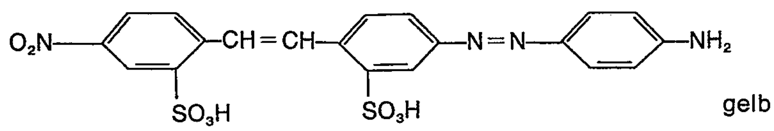

gelb

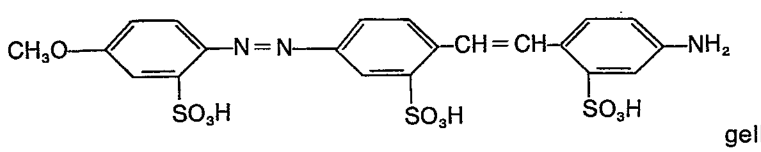

gelb

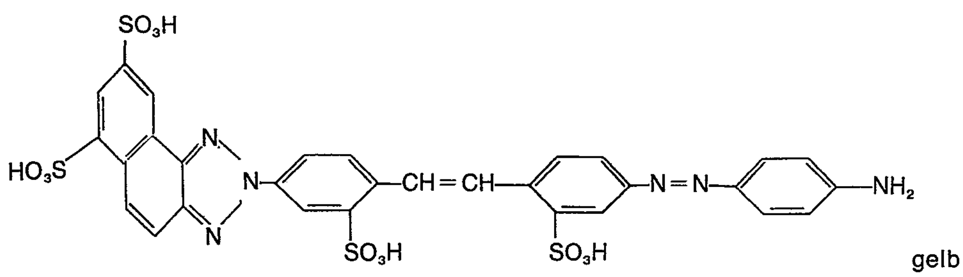

gelb

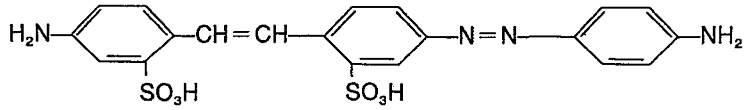

gelb

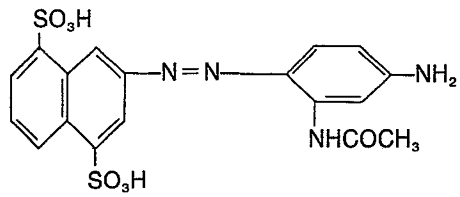

gelb

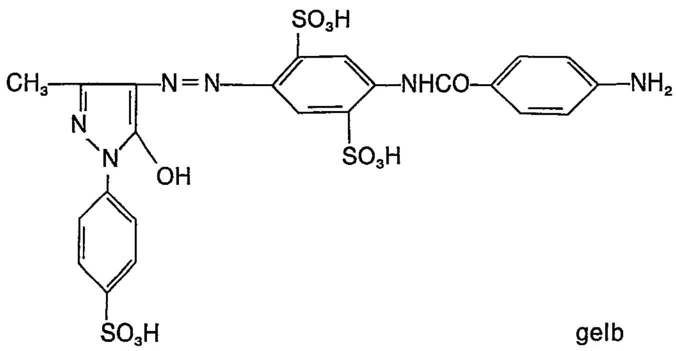

gelb

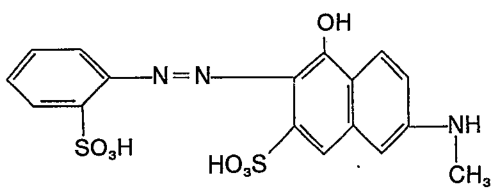

orange

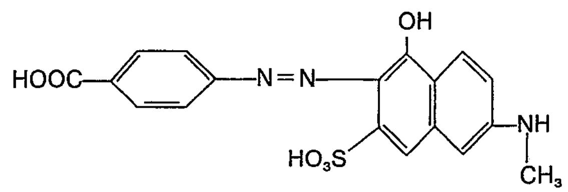

orange

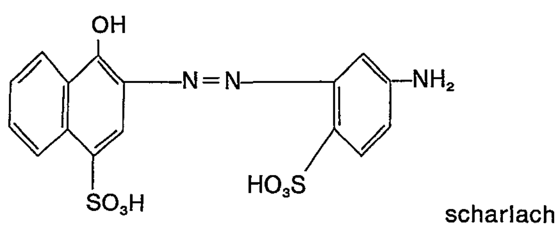

scharlach

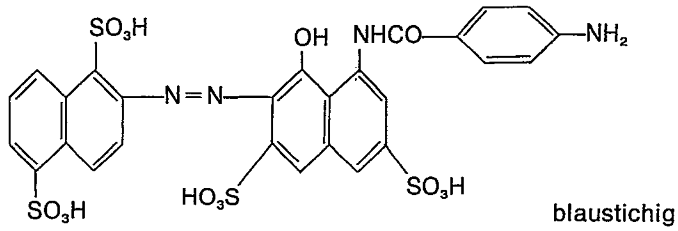

blaustichig rot

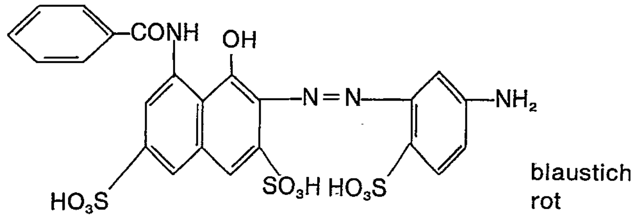

blaustichig rot

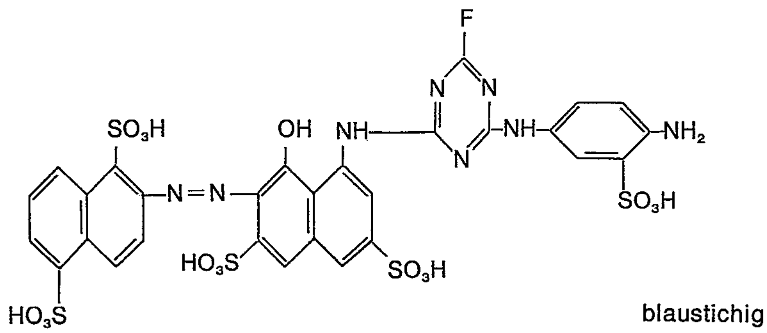

blaustichig rot

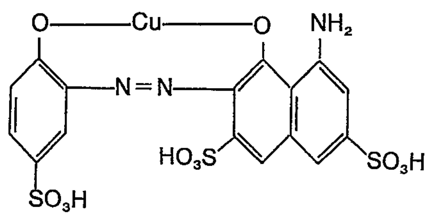

violett

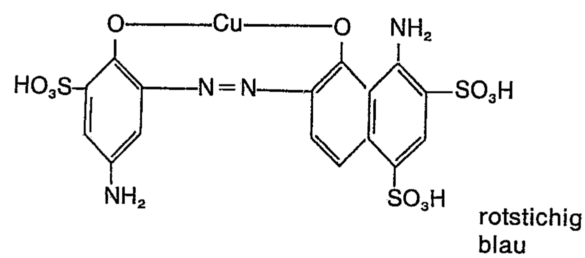

rotstichig blau

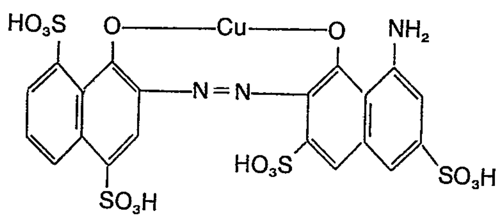

blau

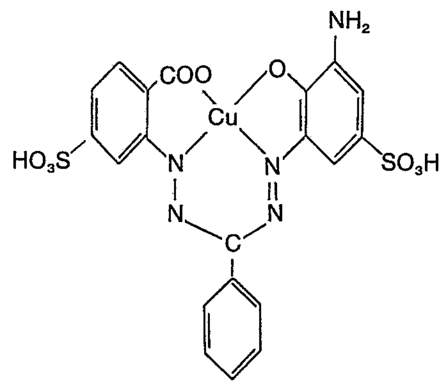

blau

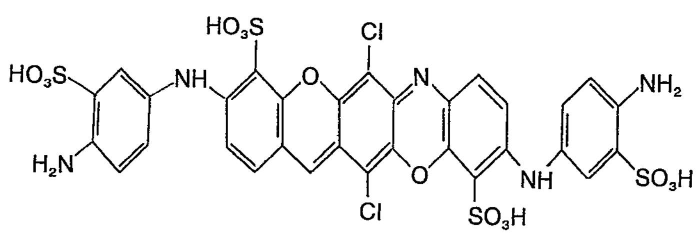

blau

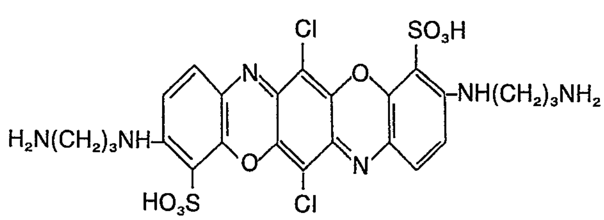

blau

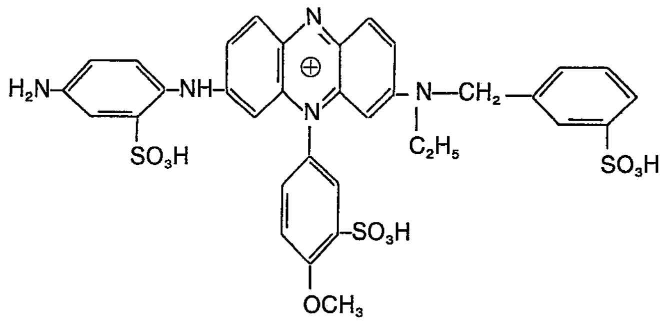

rotstichig blau

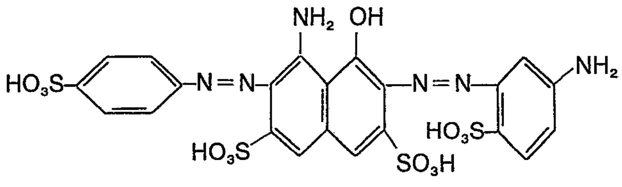

marineblau

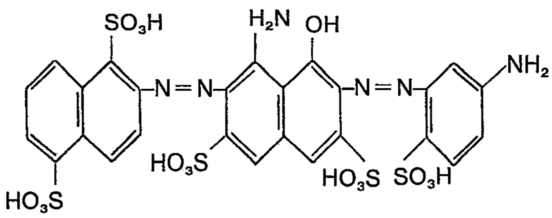

marineblau

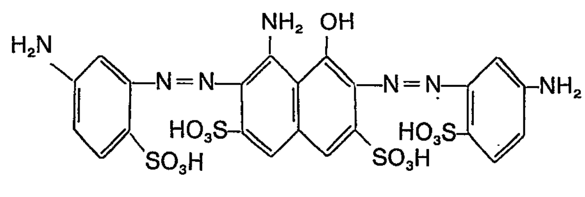

marineblau

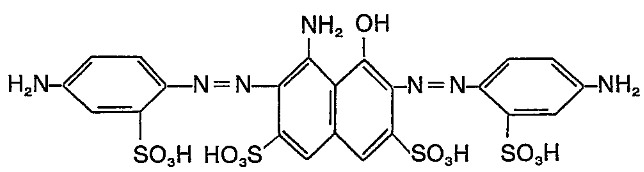

grünblau

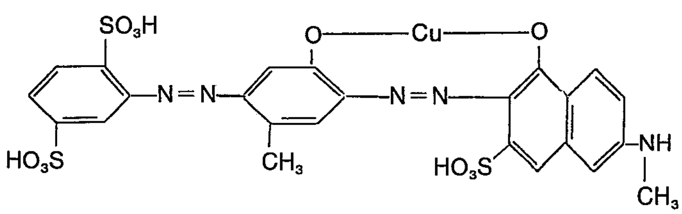

marineblau

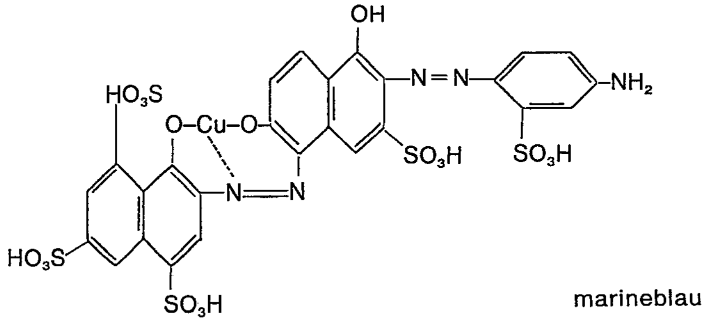

marineblau

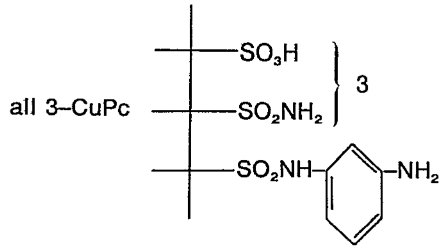

türkis

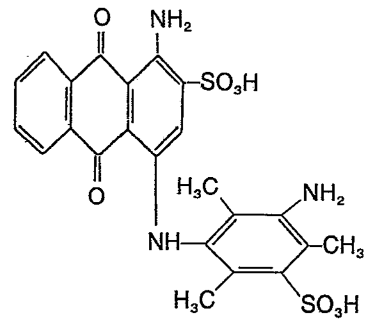

königsblau

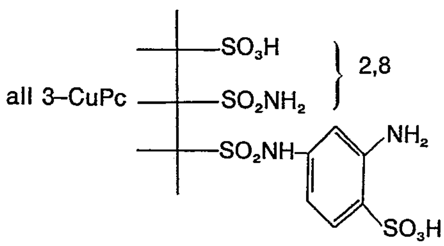

türkis

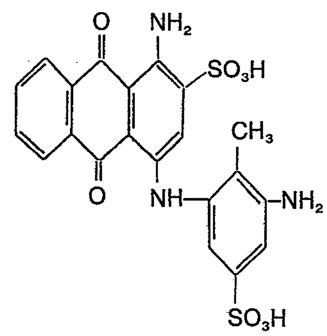

blau

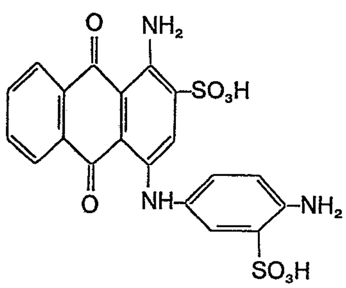

grünstichig blau

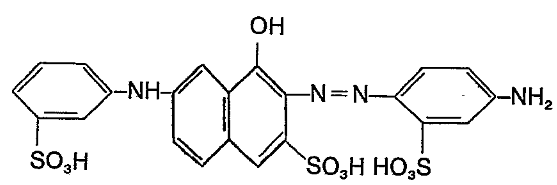

braun

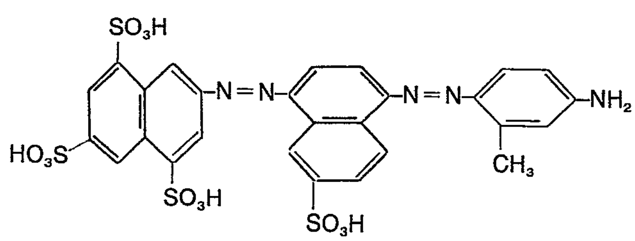

braun

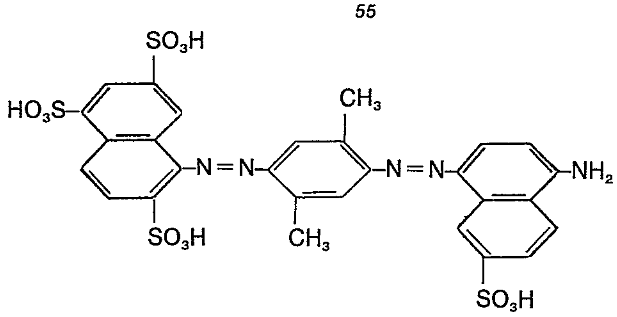

braun

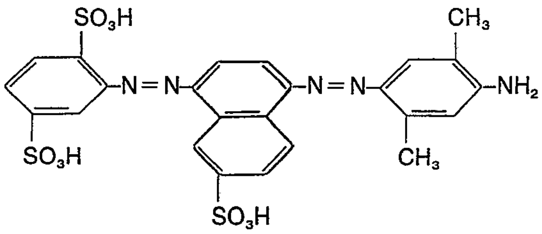

braun

Ähnlich gute Farbstoffe werden erhalten, wenn man statt des 2,4,5-Trichlor-6-methylsulfonyl-pyrimidins das 2,4-Dichlor-5-fluor-6-methylsulfonyl-pyrimidin oder das 2,4-Difluor-5-chlor-6-methylsulfonyl-pyrimidin als Reaktivkomponente verwendet.

Beispiel 3

3,76 Teile 2,4-Diaminobenzol-sulfonsäure werden in 200 Teilen Wasser neutral gelöst. Zur erhaltenen Lösung gibt man hierauf bei Zimmertemperatur unter kräftigem Rühren eine Lösung von 5,75 Teilen 2,4,5-Trichlor-6-methylsulfonyl-pyrimidin in 50 Teilen Aceton. Durch Zutropfen von 1-n Natriumhydroxydlösung wird das pH des Reaktionsgemisches bei 5 gehalten. Nach erfolgter Umsetzung wird die Lösung klärfiltriert und durch Zugabe von Kaliumchlorid wird das Kondensationsprodukt der Formel

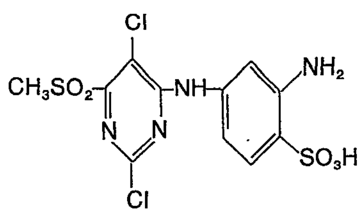

ausgesalzen.

Die erhaltene Verbindung wird in üblicher Weise diazotiert und mit einer sodaalkalischen Lösung von 1-(2′,5′-Dichlorphenyl)-3-methyl-5-pyrazolon-4′-sulfonsäure vereinigt.

Man erhält einen Farbstoff, der Baumwolle in grünstichig gelben Tönen färbt.

Verwendet man anstelle des obigen Pyrazolons eine äquivalente Menge der in Kolonne I der nachfolgenden Tabelle angegebenen Kupplungskomponenten, so erhält man Farbstoffe, die Baumwolle in den in Kolonne II angegebenen Tönen färben.

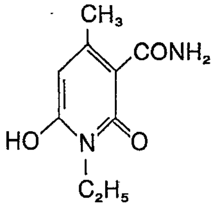

grünstichig gelb

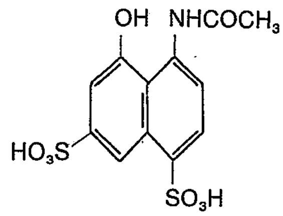

scharlach

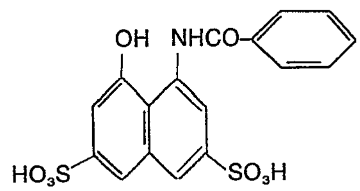

blaustichig rot

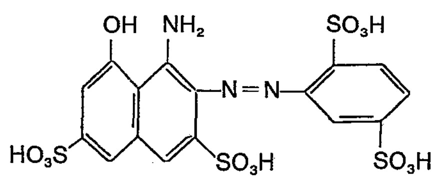

marineblau

Beispiel 4

5,16 Teile 1-Amino-8-hydroxy-naphthalin-3,6-disulfonsäure

werden in 300 Teilen Wasser neutral gelöst. Zur erhaltenen Lösung gibt man hierauf bei Zimmertemperatur unter kräftigem Rühren eine Lösung von 5,75 Teilen 2,4,5-Trichlor-6-methylsulfonyl-pyrimidin in 50 Teilen Aceton. Durch Zutropfen von 1-n Natriumhydroxydlösung wird das pH des Reaktionsgemisches bei 5 gehalten. Nach erfolgter Umsetzung wird die Lösung klärfiltriert und durch Zugabe von Kaliumchlorid wird die erhaltene Kupplungskomponente der Formel

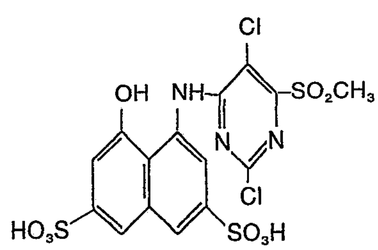

ausgesalzen.

Versetzt man in üblicher Weise eine bikarbonatalkalische Lösung obiger Verbindung mit diazotierter Orthanilsäure, so erhält man einen Farbstoff, der Baumwolle in blaustichig roten Tönen färbt.

Beispiel 5

Verwendet man zur Acylierung der aminogruppenhaltigen Chromophore nach den Angaben von Beispiel 1 anstelle von 2,4,5-Trichlor-6-methylsulfonyl-pyrimidin eine äquivalente Menge von 2,4,5-Trichlor-6-äthylsulfonyl-pyrimidin, so erhält man Farbstoffe mit sehr ähnlichen Eigenschaften.

Beispiel 6

6-Methylsulfonyl-2,4-dichlor-5-fluor-pyrimidin.

In eine Lösung von 17,8 g 30,4-%igem Natriummethylat (0,1 Mol) in Methanol, verdünnt mit 100 ml Methanol werden bei 0 bis 5° 4,9 g Methylmerkaptan (0,1 Mol) eingeleitet und zwei Stunden bei 25° nachgerührt. Diese Natriummethylmerkaptidlösung wird bei 0–5° zu einer Lösung von 20,1 g 5-Fluor-2,4,6-trichlor-pyrimidin (0,1 Mol) getropft und 2 Stunden bei 0 bis 5°, dann über Nacht bei Raumtemperatur ausgerührt. Die entstandene Suspension wird mit 200 ml Eiswasser verdünnt und bei 0 bis 5° mit Chlorgas gesättigt, eine Stunde nachgerührt und dann im Vakuum zum Brei eingeengt. Dieser wird in Methylenchlorid-Eiswasser aufgenommen, die Phasen getrennt und die Methylenchloridphase noch zweimal mit Eiswasser extrahiert. Aus der mit Magnesiumsulfat getrockneten Methylenchloridlösung erhält man nach Eindampfen des Lösungsmittels das 6-Methylsulfonyl-2,4-dichlor-5-fluor-pyrimidin als ein dickflüssiges Öl.

Beispiel 7

6-Methylsulfonyl-5-chlor-2,4-difluor-pyrimidin.

In eine Lösung von 56,5 g 30,8-%igem Natriummethylat (0,32 Mol) in Methanol, verdünnt mit 100 ml Methanol, werden bei 0 bis 5° 15,5 g Methylmerkaptan (0,32 Mol) eingeleitet und eine halbe Stunde nachgerührt. Die Lösung wird am Rotationsverdampfer zur Trockene eingedampft und der Rückstand bei 40° im Hochvakuum getrocknet. Das erhaltene Natriummethylmerkaptid (21,8 g) wird in 250 ml Acetonitril angeschlämmt und die Suspension portionenweise zu einer Lösung von 52,7 g 5-Chlor-2,4,6-trifluor-pyrimidin in 500 ml Acetonitril gegeben. Die Suspension wird je 20 Stunden bei 0 bis 5° und bei Raumtemperatur gerührt, von ca. 10 g Niederschlag geklärt und die Lösung am Rotationsverdampfer bei 20 bis 25° eingedampft. Der kristalline Rückstand (47,5 g) wird in 500 ml Methylenchlorid gelöst und innert 2½ Stunden bei 0 bis 5° mit 92 g 40-%iger Peressigsäure (0,48 Mol) versetzt. Die Lösung wird je 20 Stunden bei 0 bis 5° und Raumtemperatur und 3 Stunden bei 40° gerührt. Anschliessend wird auf 5° gekühlt, mit 250 ml Eiswasser versetzt, klärfiltriert und die Phasen getrennt. Die Methylenchloridphase wird noch 6mal mit Eiswasser nachextrahiert, bis im Wasser keine Persäure mehr nachweisbar ist. Dann wird über Magnesiumsulfat getrocknet und das Lösungsmittel am Vakuum bei 25° abgezogen. Es verbleiben 26,7 g 6-Methylsulfonyl-5-chlor-2,4-difluor-pyrimidin als dickflüssiges Öl.

Färbevorschrift I

2 Teile des gemäss Beispiel 2 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt, und dann getrocknet.

Danach imprägniert man das Gewebe mit einer 20 °C warmen Lösung, die pro Liter 5 Gramm Natriumhydroxyd und 300 Gramm Natriumchlorid enthält, quetscht auf 75% Gewichtszunahme ab, dämpft die Färbung während 30 Sekunden bei 100 bis 101 °C, spült, seift während einer Viertelstunde in einer 0,3%igen kochenden Lösung eines ionenfreien Waschmittels, spült und trocknet.

Färbevorschrift II

2 Teile des gemäss Beispiel 2 erhältlichen Farbstoffes werden in 100 Teilen Wasser gelöst.

Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 40 °C, wobei nach 30 Minuten 40 Teile kalzinierte Soda und nochmals 60 Teile Natriumchlorid zugegeben werden. Man hält die Temperatur 30 Minuten auf 40 °C, spült und seift dann die Färbung während 15 Minuten in einer 0,3%igen kochenden Lösung eines ionenfreien Waschmittels, spült und trocknet.

Druckvorschrift

2 Teile des gemäss Beispiel 2 hergestellten Farbstoffes werden unter schnellem Rühren in 100 Teile einer Stammverdickung, enthaltend 45 Teile 5%ige Natriumalginatverdickung, 32 Teile Wasser, 20 Teile Harnstoff, 1 Teil m-nitrobenzolsulfonsaures Natrium sowie 2 Teile Natriumcarbonat, eingestreut.

Mit der so erhaltenen Druckpaste bedruckt man ein Baumwollgewebe auf einer Rouleauxdruckmaschine, trocknet und dämpft den erhaltenen bedruckten Stoff 2 bis 8 Minuten bei 100 °C in gesättigtem Dampf. Das bedruckte Gewebe wird dann in kaltem und heissem Wasser gründlich gespült, wobei sich die nicht chemisch fixierten Anteile sehr leicht von der Faser entfernen lassen, und anschliessend getrocknet.

**Patentansprüche**

1. Reaktivfarbstoffe der Formel

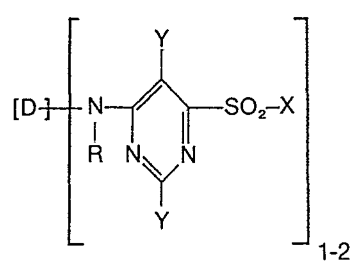

(1),

worin D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, R Wasserstoff oder gegebenenfalls substituiertes $C_{1-4}$-Alkyl, X $C_{1-4}$-Alkyl und Y Fluor, Chlor oder Brom ist, und die beiden Y gleich oder verschieden sind.

2. Reaktivfarbstoffe gemäss Anspruch 1, worin D, R und X die in Anspruch 1 angegebenen Bedeutungen haben und Y Chlor ist.

3. Reaktivfarbstoffe gemäss Anspruch 1, worin D, R und Y die in Anspruch 1 angegebenen Bedeutungen haben und X Methyl ist.

4. Reaktivfarbstoffe gemäss Anspruch 3, worin D und R die in Anspruch 3 angegebenen Bedeutungen haben und X Methyl und Y Chlor ist.

5. Reaktivfarbstoffe gemäss Anspruch 1, worin D der Rest eines Mono- oder Disazofarbstoffes ist.

6. Reaktivfarbstoffe gemäss Anspruch 1, worin D der Rest eines Metallkomplexazo- oder Formazanfarbstoffes ist.

7. Reaktivfarbstoffe gemäss Anspruch 6, worin D der Rest eines Metallkomplexazofarbstoffes der Benzol- oder Naphthalinreihe ist.

8. Reaktivfarbstoffe gemäss Anspruch 7, worin D der Rest eines 1 : 1-Kupferkomplexazofarbstoffes der Benzol- oder Naphthalinreihe ist, und das Kupferatom an jeweils eine metallisierbare Gruppe in ortho-Position zur Azobindung gebunden ist.

9. Reaktivfarbstoffe gemäss Anspruch 5, der Formel

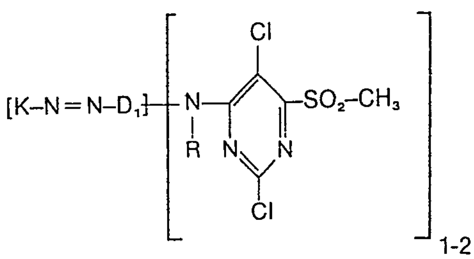

(2),

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist, oder je ein Reaktivrest sowohl an die Diazokomponente als auch an die Kupplungskomponente gebunden ist.

10. Reaktivfarbstoffe gemäss Anspruch 9, worin R Wasserstoff oder Methyl ist.

11. 1 : 1-Kupferkomplexe von Reaktivfarbstoffen gemäss Anspruch 9.

12. Der Reaktivfarbstoff gemäss Anspruch 9, der Formel

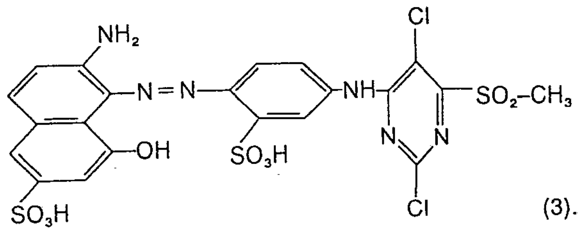

(3).

13. Verfahren zur Herstellung von Reaktivfarbstoffen gemäss Anspruch 1, dadurch gekennzeichnet, dass man organische Farbstoffe der Formel

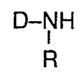

(4)

oder Farbstoffvorprodukte mit mindestens einem Äquivalent einer Verbindung der Formel

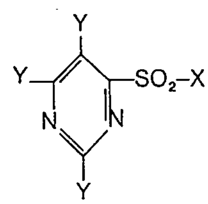

(5),

wobei D, R, X und Y in den Formeln (4) und (5) die in Anspruch 1 angegebenen Bedeutungen haben, zu einem Reaktivfarbstoff der Formel (1) kondensiert, und dass man im Falle der Verwendung von Farbstoffvorprodukten, diese in die gewünschten Endfarbstoffe umwandelt.

14. Verfahren gemäss Anspruch 13, zur Herstellung des Reaktivfarbstoffes der Formel

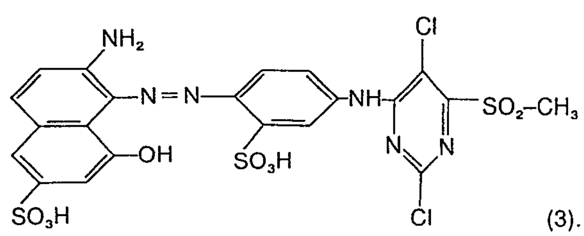

(3).

dadurch gekennzeichnet, dass man den durch Kupplung von diazotierter 1-Amino-4-acetylaminobenzol-6-sulfonsäure auf 2-Amino-8-hydroxynaphthalin-6-sulfonsäure und anschliessende Verseifung der Acetylaminogruppe erhaltenen Azofarbstoff mit 2,4,5-Trichlor-6-methylsulfonylpyrimidin kondensiert.

15. Verwendung der Reaktivfarbstoffe gemäss den Ansprüchen 1 bis 12 zum Färben und Bedrucken.

16. Verfahren zum Färben und Bedrucken unter Verwendung der Reaktivfarbstoffe gemäss Anspruch 1.

17. Verfahren gemäss Anspruch 16 zum Färben von Cellulosefasern.

18. Färbe- bzw. Druckpräparate, die Reaktivfarbstoffe gemäss den Ansprüchen 1 bis 12 enthalten.

19. Das gemäss Anspruch 16 oder 17 gefärbte oder bedruckte Material, insbesondere das Textilmaterial.

## Claims

1. A reactive dye of the formula

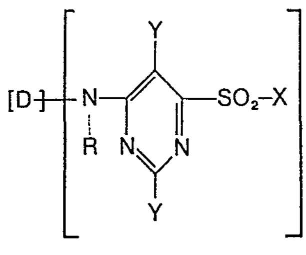

(1)

in which D is the radical of an organic dye of the monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide series, R is hydrogen or unsubstituted or substituted $C_{1-4}$alkyl, X is $C_{1-4}$alkyl and Y is fluorine, chlorine or bromine and the two Ys are identical or different.

2. A reactive dye according to claim 1, in which D, R and X are as defined in claim 1 and Y is chlorine.

3. A reactive dye according to claim 1, in which D, R and Y are as defined in claim 1 and X is methyl.

4. A reactive dye according to claim 3, in which D and R are as defined in claim 3 and X is methyl and Y is chlorine.

5. A reactive dye according to claim 1, in which D is the radical of a monoazo or disazo dye.

6. A reactive dye according to claim 1, in which D is the radical of a metal complex azo or formazan dye.

7. A reactive dye according to claim 6, in which D is the radical of a metal complex azo dye of the benzene or naphthalene series.

8. A reactive dye according to claim 7, in which D is the radical of a 1 : 1 copper complex azo dye of the benzene or naphthalene series and the copper atom is in each case bonded to a metallisable group in the ortho-position relative to the azo bond.

9. A reactive dye according to claim 5, of the formula

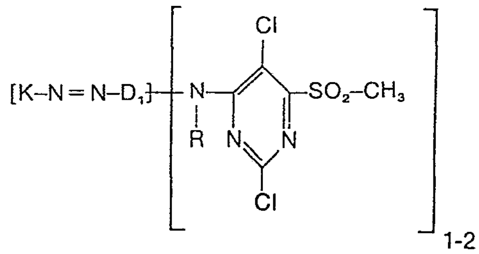

(2)

in which $D_1$ is the radical of a diazo component of the benzene or naphthalene series, K is the radical of a coupling component of the benzene or naphthalene series or of the heterocyclic series and R is hydrogen or unsubstituted or substituted $C_{1-4}$alkyl and the reactive radical is bonded to the diazo component or to the coupling component or one reactive radical each is bonded not only to the diazo component but also to the coupling component.

10. A reactive dye according to claim 9, in which R is hydrogen or methyl.

11. A 1 : 1 copper complex of a reactive dye according to claim 9.

12. The reactive dye according to claim 9, of the formula

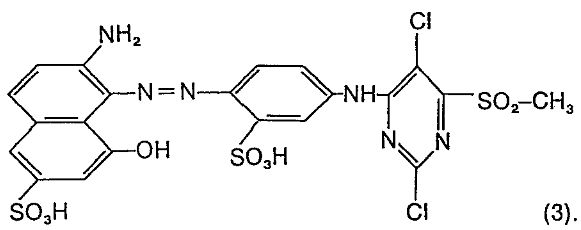

(3).

13. A process for the preparation of a reactive dye according to claim 1, which comprises condensing an organic dye of the formula

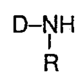

(4)

or a dye precursor with at least one equivalent of a compound of the formula

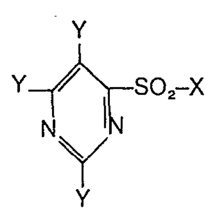

(5)

D, R, X and Y in the formulae (4) and (5) being as defined in claim 1, to give a reactive dye of the formula (1), and, when a dye precursor is used, converting this into the final dye desired.

14. A process according to claim 13, for the preparation of the reactive dye of the formula

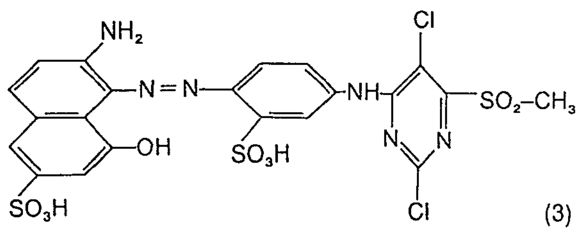

(3)

which comprises condensing the azo dye obtained by coupling diazotised 1-amino-4-acetylaminobenzene-6-sulfonic acid with 2-amino-8-hydroxynaphthalene-6-sulfonic acid and subsequent saponification of the acetylamino group with 2,4,5-trichloro-6-methylsulfonylpyrimidine.

15. Use of a reactive dye according to any one of claims 1 to 12 for dyeing or printing.

16. A process for dyeing or printing, which comprises the use of a reactive dye according to claim 1.

17. A process according to claim 16 for dyeing cellulose fibres.

18. A dyeing or printing preparation which contains a reactive dye according to any one of claims 1 to 12.

19. Material, in particular textile material, dyed or printed according to either of claims 16 or 17.

**Revendications**

1. Colorants réactifs de formule

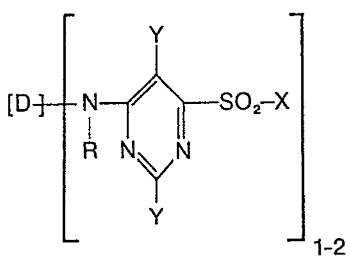

(1),

dans laquelle D est le reste d'un colorant organique de la série monoazoïque, polyazoïque, azoïque à complexes métalliques, anthraquinone, phthalocyanine, formazan, azométhine, dioxazine, phénazine, stilbène, triphénylméthane, xanthène, thioxanthone, nitroarylique, naphtoquinone, pyrènequinone, ou pérylènetétracarbimide, R est un atome d'hydrogène ou un groupe alkyle en $C_{1-4}$ éventuellement substitué, X est un groupe alkyle en $C_{1-4}$, et Y est un atome de fluor, de chlore, ou de brome, les deux atomes Y étant identiques ou différents.

2. Colorants réactifs selon la revendication 1, dans lesquels D, R et X ont les significations indiquées dans la revendication 1, et Y est un atome de chlore.

3. Colorants réactifs selon la revendication 1, dans lesquels D, R et Y ont les significations indiquées dans la revendication 1, et X est un groupe méthyle.

4. Colorants réactifs selon la revendication 3, dans lesquels D et R ont les significations indiquées dans la revendication 3, X est un groupe méthyle et Y est un atome de chlore.

5. Colorants réactifs selon la revendication 1, dans lesquels D est le reste d'un colorant monoazoïque ou disazoïque.

6. Colorants réactifs selon la revendication 1, dans lesquels D est le reste d'un colorant azoïque à complexes métalliques ou d'un colorant formazan.

7. Colorants réactifs selon la revendication 6, dans lesquels D est le reste d'un colorant azoïque à complexe métallique de la série du benzène ou du naphtalène.

8. Colorants réactifs selon la revendication 7, dans lesquels D est le reste d'un colorant azoïque à complexe de cuivre 1 : 1 de la série du benzène ou du naphtalène, l'atome de cuivre étant lié à deux groupes métallisables placés chacun en position ortho par rapport à la liaison azo.

9. Colorants réactifs selon la revendication 5, de formule

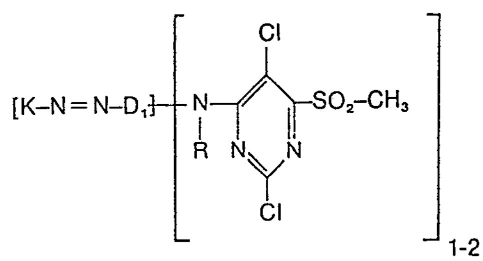

(2),

dans laquelle $D_1$ est le reste d'un composant diazoïque de la série du benzène ou du naphtalène, K est le reste d'un composant de copulation de la série du benzène ou du naphtalène ou de la série hétérocyclique, et R est un atome d'hydrogène ou un groupe alkyle en $C_{1-4}$ éventuellement substitué, le groupe réactif étant fixé sur le composant diazoïque ou sur le composant de copulation, ou bien ces deux composants portant chacun un groupe réactif.

10. Colorants réactifs selon la revendication 9, dans lesquels R est un atome d'hydrogène ou un groupe méthyle.

11. Complexes de cuivre 1 : 1 des colorants réactifs conformes à la revendication 9.

12. Le colorant réactif conforme à la revendication 9, de formule

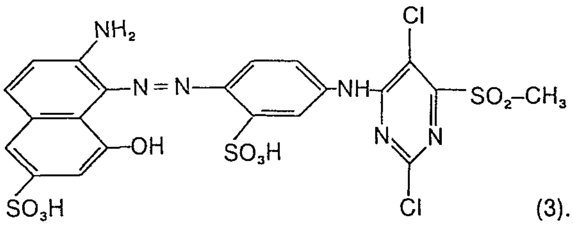

(3).

13. Procédé de préparation des colorants réactifs conformes à la revendication 1, caractérisé en ce que l'on condense des colorants organiques de formule

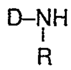 (4)

ou des précurseurs de colorants avec au moins un équivalent d'un composé de formule

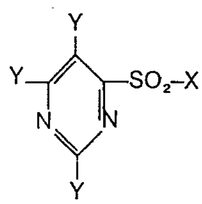

(5)

D, R, X et Y ayant dans les formules (4) et (5) les significations indiquées dans la revendication 1, en un colorant réactif de formule (1), et que, dans le cas où l'on utilise des précurseurs de colorants, on transforme ceux-ci en les colorants finaux désirés.

14. Procédé selon la revendication 13, pour la préparation du colorant réactif de formule

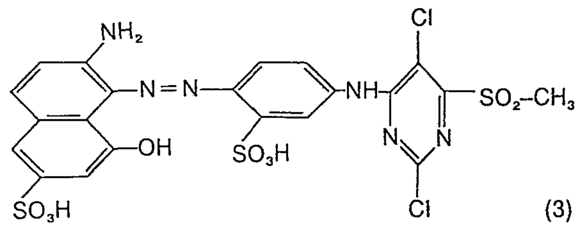

(3)

caractérisé en ce que l'on condense avec la 2,4,5-trichloro-6-méthylsulfonylpyrimidine le colorant azoïque obtenu par copulation de l'acide 1-amino-4-acétylaminobenzène-6-sulfonique diazoté sur l'acide 2-amino-8-hydroxynaphtalène-6-sulfonique et saponification ultérieure du groupe acétylamino.

15. Emploi des colorants réactifs conformes aux revendications 1 à 12 pour la teinture et l'impression.

16. Procédé de teinture et d'impression utilisant les colorants réactifs conformes à la revendication 1.

17. Procédé selon la revendication 16 pour la teinture de fibres de cellulose.

18. Préparation de teinture ou d'impression contenant les colorants réactifs conformes aux revendications 1 à 12.

19. Matériaux, en particulier matériaux textiles, teints ou imprimés selon la revendication 16 ou 17.